(19) Europäisches Patentamt / European Patent Office / Office européen des brevets

(11) **EP 4 201 626 A1**

(12) **EUROPEAN PATENT APPLICATION**

(43) Date of publication:
**28.06.2023 Bulletin 2023/26**

(21) Application number: **22212080.0**

(22) Date of filing: **07.12.2022**

(51) International Patent Classification (IPC):
**B29B 7/00** $^{(2006.01)}$     **C08L 15/00** $^{(2006.01)}$
**C08K 3/22** $^{(2006.01)}$     **C08K 5/548** $^{(2006.01)}$
**C08K 3/36** $^{(2006.01)}$     **C08K 5/18** $^{(2006.01)}$

(52) Cooperative Patent Classification (CPC):
(C-Sets available)
**C08L 15/00; B29B 7/183; B29B 7/28;
B29B 7/7495; B29B 7/823; B29B 7/90**     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2021 JP 2021208975**

(71) Applicant: **Toyo Tire Corporation
Itami-shi, Hyogo 664-0847 (JP)**

(72) Inventor: **Kamada, Shinsaku
Hyogo, 664-0847 (JP)**

(74) Representative: **Hannke, Christian
Hannke Bittner & Partner
Patent- und Rechtsanwälte mbB
Prüfeninger Straße 1
93049 Regensburg (DE)**

(54) **RUBBER COMPOSITION MANUFACTURING METHOD AND TIRE MANUFACTURING METHOD**

(57) An object is to provide a method for manufacturing a tire and a method for manufacturing a rubber composition permitting improvement in vulcanization rate, ability to achieve reduced fuel consumption, and/or wet braking performance. A rubber composition manufacturing method comprises: an operation in which at least amine antioxidant, zinc oxide, silane coupling agent, silica, and rubber comprising modified polymer are fed into an internal kneader (1); and an operation in which kneading is carried out at the internal kneader (1) while kneading temperature is controlled so as to suppress occurrence of a coupling reaction between the silica and the silane coupling agent, and so as to suppress occurrence of a bonding reaction between the silica and the modified polymer.

[FIG. 1]

(52) Cooperative Patent Classification (CPC): (Cont.)

C-Sets
**C08L 15/00, C08L 15/00, C08L 91/00, C08L 7/00,
C08L 91/06, C08K 3/36, C08K 3/22, C08K 5/18,
C08K 5/09, C08K 3/06, C08K 5/47, C08K 5/548**

**Description**

TECHNICAL FIELD

The present disclosure relates to a rubber composition manufacturing method and a tire manufacturing method.

BACKGROUND ART

Because silica which is employed as reinforcing filler in rubber possesses silanol groups, there is a tendency for flocculation to occur due to hydrogen bonding. It is therefore the case that silica cannot easily be satisfactorily dispersed. In particular, silica cannot easily be satisfactorily dispersed in situations such as when silica filler content is high, silica particle diameter is small, and so forth.

To decrease silica cohesive forces, addition of silane coupling agent is known (see Patent Reference No. 1). Silane coupling agents can prevent flocculation of silica because they are capable of reacting with silica during kneading. Moreover, silane coupling agents can cause bonding of silica and rubber because they are capable of reacting with rubber double bonds during vulcanization, for example.

It so happens with rubber compositions that zinc oxide is ordinarily added thereto as vulcanization accelerator activator. Zinc oxide is capable of increasing the rubber composition vulcanization rate.

When using an internal kneader to prepare a rubber composition, it is known that causing zinc oxide to be fed into the internal kneader together with rubber, silica, and silane coupling agent will cause the vulcanization rate to decrease (see Patent Reference No. 2). That is, it is known that causing zinc oxide to be fed thereinto together with silica and/or the like in a single kneading stage will result in decrease in vulcanization rate.

PRIOR ART REFERENCES

PATENT REFERENCES

Patent Reference No. 1: Japanese Patent Application Publication Kokai No. 2021-102718
Patent Reference No. 2: Japanese Patent Application Publication Kokai No. 2002-220492

SUMMARY OF INVENTION

PROBLEM TO BE SOLVED BY INVENTION

When amine antioxidant is fed into an internal kneader together with modified polymer, it so happens that there is a tendency for the properties, e.g., ability to achieve reduced fuel consumption (i.e., reduced heat generation), of the vulcanized rubber to worsen.

If, to improve vulcanization rate or ability to achieve reduced fuel consumption, amine antioxidant or zinc oxide were to be fed thereinto during a kneading stage that is different from the kneading stage at which a modified polymer or silica is fed thereinto, this would cause operations to become complicated. The reason for this is that causing same to be fed thereinto during a different kneading stage would unavoidably lead to an increase in man-hours.

It is an object of the present invention to provide a method for manufacturing a tire and a method for manufacturing a rubber composition permitting improvement in vulcanization rate, ability to achieve reduced fuel consumption, and/or wet braking performance.

MEANS FOR SOLVING PROBLEM

To solve such problems, a rubber composition manufacturing method in accordance with the present invention comprises

an operation in which at least amine antioxidant, zinc oxide, silane coupling agent, silica, and rubber comprising modified polymer are fed into an internal kneader; and
an operation in which kneading is carried out at the internal kneader while kneading temperature is controlled so as to suppress occurrence of a coupling reaction between the silica and the silane coupling agent, and so as to suppress occurrence of a bonding reaction between the silica and the modified polymer.

Here, "bonding reaction" means that there is chemical reaction between a functional group of the modified polymer and a silanol group of the silica, this being a reaction that produces a bond between the modified polymer and the silica.

As a result of employment of the rubber composition manufacturing method of the present invention, because at least amine antioxidant, zinc oxide, silane coupling agent, silica, and rubber are fed into an internal kneader, operations are not complicated. Describing this in more specific terms, in accordance with the rubber composition manufacturing method of the present invention, because these are fed thereinto during a single kneading stage, operations are less complicated than they would be were the zinc oxide and/or amine antioxidant to be fed thereinto at a kneading stage which is different from the kneading stage at which the modified polymer, silica, and/or silane coupling agent are fed thereinto.

Moreover, by causing kneading to be carried out while kneading temperature is controlled so as to suppress occurrence of a coupling reaction (specifically, a coupling reaction between the silica and the silane coupling agent), and so as to suppress occurrence of a bonding reaction (specifically, a bonding reaction between the silica and the modified polymer), it is possible to increase the degree to which silica, zinc oxide, and/or amine antioxidant are dispersed prior to occurrence of these reactions. As a result, during any kneading which may be carried out thereafter, it will be possible to cause these reactions to proceed while in a state such that silica, zinc oxide, and/or amine antioxidant are dispersed to a high degree. This will make it possible to reduce the inhibitory effect that zinc oxide has on the coupling reaction and/or the inhibitory effect that amine antioxidant has on the bonding reaction, and will make it possible to increase the degree to which silica is dispersed within the rubber composition. It will therefore be possible to improve wet braking performance and ability to achieve reduced fuel consumption.

Moreover, in accordance with the rubber composition manufacturing method of the present invention, because it is possible to increase the degree to which zinc oxide is dispersed, it will be possible to cause zinc oxide to function effectively as a vulcanization accelerator activator. As a result, it will be possible to improve vulcanization rate.

It is preferred that the constitution be such that the amine antioxidant is N-phenyl-N'-(1,3-dimethylbutyl)-p-phenylenediamine. The reason for this is that although N-phenyl-N'-(1,3-dimethylbutyl)-p-phenylenediamine has an inhibitory effect on a bonding reaction (specifically, the bonding reaction between silica and modified polymer), it is possible to reduce that inhibitory effect.

It is preferred that the constitution be such that the silica is fed into the internal kneader in an amount that is not less than 100 parts by mass per 100 parts by mass of the rubber that is fed into the internal kneader. The reason for this is that when large amounts of silica are blended therein (e.g., when the amount of silica is not less than 100 parts by mass), there will be good ability to achieve improvement in vulcanization rate. That is, it will be possible to even further suppress worsening of vulcanization rate that might otherwise occur as a result of batch-feeding (i.e., causing at least rubber, silica, silane coupling agent, zinc oxide, and amine antioxidant to be fed into an internal kneader in a single kneading stage).

It is preferred that the constitution of the rubber composition manufacturing method be such that it further comprises an operation in which kneading is carried out at the internal kneader while kneading temperature is controlled so as to cause the coupling reaction and the bonding reaction to proceed. As a result of employment of such constitution, because it will be possible to cause silane coupling agent to become affixed to silica, it will be possible to reduce silica cohesive forces. That is, it will be possible to increase the degree to which silica is dispersed. Furthermore, because this will make it possible for the modified polymer to be constrained by silica, it will be possible to improve ability to achieve reduced heat generation in the vulcanized rubber. In addition, because it will be possible to stabilize kneading temperature, this will make it possible to cause the coupling reaction and the bonding reaction to proceed while suppressing occurrence of gel formation.

A tire manufacturing method in accordance with the present invention comprises

an operation in which the rubber composition manufacturing method is used to prepare the rubber composition; and
an operation in which the rubber composition is used to fabricate an unvulcanized tire.

BRIEF DESCRIPTION OF DRAWINGS

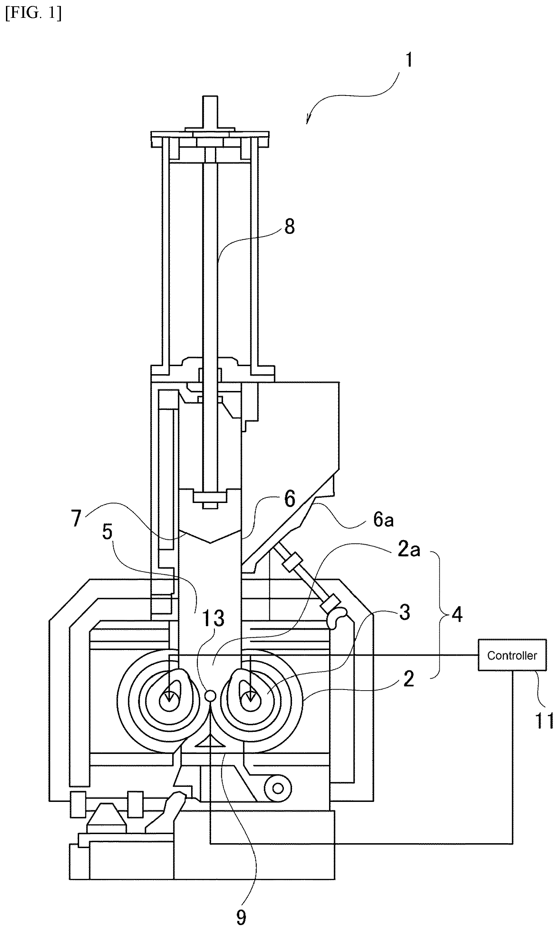

[FIG. 1] Conceptual diagram showing constitution of internal kneader capable of being used in accordance with the present embodiment.

EMBODIMENTS FOR CARRYING OUT INVENTION

Below, description is given with respect to embodiments of the present invention.

1. Internal Kneader

Description will first be given with respect to an internal kneader capable of being used in accordance with the present embodiment.

As shown in FIG. 1, internal kneader 1 comprises kneading chamber 4 which has casing 2 and rotor 3; cylindrical neck 5 which is located above kneading chamber 4; inlet port 6 which is provided at neck 5; hopper door 6a which is capable of opening and closing inlet port 6; ram 7 which is capable of moving vertically in the space within neck 5; and drop door 9 which is located at the bottom face of kneading chamber 4. As internal kneader 1, intermeshing internal kneaders and tangential internal kneaders may be cited as examples.

Opening 2a is provided in a central region at the top face of casing 2. Cylindrical neck 5 is provided above opening 2a. Inlet port 6, by way of which rubber and compounding ingredients can be fed thereinto, is provided at the side face of neck 5. Two or more inlet ports 6 may be provided. Rubber and compounding ingredients fed thereinto from inlet port 6 pass through the space at neck 5 and arrive at the interior of casing 2 by way of opening 2a of casing 2.

Ram 7 is of such shape as to be capable of closing off opening 2a of casing 2. By virtue of shaft 8 which is connected thereto at the top end thereof, ram 7 is made capable of moving vertically within the space of neck 5. Under the force of its own weight and/or as a result of a pressing force that acts thereon from shaft 8, ram 7 is able to press on and compress rubber that is present within casing 2.

Drop door 9 is closed during kneading. Drop door 9 opens following termination of kneading.

The rotational speed of a motor (not shown) which causes rotor 3 to rotate is adjusted based on control signals from controller 11. Controller 11 carries out control of the rotational speed of the motor based on information (more specifically, measured temperature Tp) regarding the temperature within kneading chamber 4 which is sent thereto from temperature sensor 13. The motor can be made to be of variable rotational speed by virtue of controller 11. The motor might, for example, be an inverter-duty motor.

To determine the rotational speed of the motor, a PID arithmetic unit provided within controller 11 carries out proportional (P), integral (I), and differential (D) arithmetic operations based on the deviation between target temperature Ts and temperature Tp measured within kneading chamber 4 as detected by temperature sensor 13. More specifically, the PID arithmetic unit determines motor rotational speed from the sum of respective control quantities obtained as a result of proportional (P) action by which a control quantity is calculated in proportion to the difference (deviation e) between measured temperature Tp and target temperature Ts, integral (I) action by which a control quantity is calculated from an integral obtained by integrating the deviation e over time, and differential (D) action by which a control quantity is calculated from the slope of the change in, i.e., the derivative of, deviation e. Note that PID is an abbreviation for Proportional Integral Differential.

2. Rubber Composition Manufacturing Method

Methods for manufacturing rubber compositions in accordance with the present embodiment will now be described.

A method for manufacturing a rubber composition in accordance with the present embodiment comprises an operation (hereinafter "Operation S1") in which a rubber mixture is prepared; and an operation (hereinafter "Operation S2") in which at least the rubber mixture and a vulcanizing-type compounding ingredient are kneaded to obtain a rubber composition.

2.1 Operation S1 (Operation in which Rubber Mixture Is Prepared)

Operation S1 comprises an operation (hereinafter "Operation K0") in which at least rubber, silica, silane coupling agent, zinc oxide, and amine antioxidant are fed into internal kneader 1; an operation (hereinafter "Operation K1") in which kneading is carried out while kneading temperature is controlled so as to be below a temperature lower limit for occurrence of a coupling reaction between the silica and the silane coupling agent and so as to be below a temperature lower limit for occurrence of a bonding reaction between the silica and a modified polymer; an operation (hereinafter "Operation K2") in which kneading is carried out while kneading temperature is increased; and an operation (hereinafter "Operation K3") in which kneading is carried out while kneading temperature is controlled so as to be not less than the temperature lower limit for occurrence of the coupling reaction and so as to be not less than the temperature lower limit for occurrence of the bonding reaction (specifically, the bonding reaction between the silica and the modified polymer).

Stating this another way, Operation S1 comprises an operation (i.e., Operation K0) in which at least rubber, silica, silane coupling agent, zinc oxide, and amine antioxidant are fed into internal kneader 1; an operation (i.e., Operation K1) in which kneading is carried out while kneading temperature is controlled so as to suppress occurrence of a coupling reaction and so as to suppress occurrence of a bonding reaction (specifically, a bonding reaction between the silica and the modified polymer); an operation (i.e., Operation K2) in which kneading is carried out while kneading temperature is increased; and an operation (i.e., Operation K3) in which kneading is carried out while kneading temperature is controlled so as to cause occurrence of the coupling reaction and the bonding reaction.

Operations K0 through K3 constitute a single kneading stage. A kneading stage is the cycle that takes place from the time that material(s) are fed into internal kneader 1 until the time that discharge occurs therefrom. Rubber, silica, silane coupling agent, and/or the like therefore remain undischarged from internal kneader 1 at the time of the transition from Operation K1 to Operation K2, and likewise remain undischarged from internal kneader 1 at the time of the transition from Operation K2 to Operation K3.

2.1.1 Operation K0 (Operation in which Rubber, Silica, and so forth Is Fed into Internal Kneader 1)

At Operation K0, at least rubber, silica, silane coupling agent, zinc oxide, and amine antioxidant are fed into internal kneader 1. These may be fed thereinto together or may be fed thereinto in any desired order. Where two or more inlet ports 6 are provided at internal kneader 1, note that these may be fed thereinto by way of two or more inlet ports 6.

As the rubber, natural rubber, polyisoprene rubber, styrene-butadiene rubber (SBR), polybutadiene rubber (BR), nitrile rubber, chloroprene rubber, and so forth may be cited as examples. One or any desired combination may be chosen from thereamong and used. It is preferred that the rubber be diene rubber.

The rubber comprises a modified polymer. The modified polymer has functional group(s). The modified polymer may be a polymer that has been modified through use of modifying agent(s) possessing functional group(s). As functional group, alkoxy group(s) are preferred. The reason for this is because alkoxy groups chemically react with silanol groups of silica, and are able to form Si-O-Si bonds. That is, this is because when the modified polymer has alkoxy group(s), it will be possible for chemical bond(s) to be created between the modified polymer and silica. As alkoxy group, methoxy groups, ethoxy groups, propoxy groups, and butoxy groups may be cited as examples. Note that while functional group(s) may be introduced at end(s) of polymer chain(s) or in mid-chain, it is preferred that they be introduced at end(s) thereof. As the modified polymer, any one species may be used, or any two or more species may be used. As the modified polymer, modified SBR and modified BR may be cited as examples. Of these, modified SBR is preferred.

The rubber may comprise rubber other than modified polymer. As such rubber, natural rubber, polyisoprene rubber, styrene-butadiene rubber (SBR), polybutadiene rubber (BR), nitrile rubber, chloroprene rubber, and so forth may be cited as examples. One or any desired combination may be chosen from thereamong and used.

The amount of modified polymer might be not less than 20 mass%, might be not less than 40 mass%, or might be not less than 60 mass%, per 100 mass% of the rubber fed thereinto at Operation K0. The amount of modified polymer might be 100 mass%, might be not greater than 90 mass%, or might be not greater than 80 mass%, per 100 mass% of rubber.

As silica, wet silica and dry silica may be cited as examples. Of these, wet silica is preferred. As wet silica, precipitated silica may be cited as example. Specific surface area of silica as determined by nitrogen adsorption might be not less than 80 $m^2/g$, or it might be not less than 120 $m^2/g$, or it might be not less than 140 $m^2/g$, or it might be not less than 160 $m^2/g$, for example. Specific surface area of silica might be not greater than 300 $m^2/g$, or it might be not greater than 280 $m^2/g$, or it might be not greater than 260 $m^2/g$, or it might be not greater than 250 $m^2/g$, for example. Here, the specific surface area of silica is measured in accordance with the multipoint nitrogen adsorption method (BET method) described at JIS K-6430.

It is preferred at Operation K0 that the amount of silica fed thereinto be not less than 10 parts by mass, more preferred that this be not less than 30 parts by mass, still more preferred that this be not less than 50 parts by mass, still more preferred that this be not less than 70 parts by mass, and still more preferred that this be not less than 100 parts by mass, per 100 parts by mass of the rubber fed thereinto at Operation K0. It is preferred that the amount of silica be not greater than 150 parts by mass, more preferred that this be not greater than 140 parts by mass, still more preferred that this be not greater than 130 parts by mass, and still more preferred that this be not greater than 120 parts by mass, per 100 parts by mass of rubber.

As silane coupling agent, bis(3-triethoxysilylpropyl)tetrasulfide, bis(3-triethoxysilylpropyl)disulfide, bis(2-triethoxysilylethyl)tetrasulfide, bis(4-triekitoshisilylbutyl)disulfide, bis(3-trimethoxysilylpropyl)tetrasulfide, bis(2-trimethoxysilylethyl)disulfide, and other such sulfide silanes, γ-mercaptopropyltrimethoxysilane, γ-mercaptopropyltriethoxysilane, mercaptopropylmethyldimethoxysilane, mercaptopropyldimethylmethoxysilane, mercaptoethyltriethoxysilane, and other such mercaptosilanes, 3-octanoylthio-1-propyltriethoxysilane, 3-propionylthiopropyltrimethoxysilane, and other such protected mercaptosilanes may be cited as examples. One or any desired combination may be chosen from thereamong and used.

It is preferred at Operation K0 that the amount of silane coupling agent fed thereinto be not less than 1 part by mass, more preferred that this be not less than 3 parts by mass, and still more preferred that this be not less than 5 parts by mass, per 100 parts by mass of the silica fed thereinto at Operation K0. The upper limit of the range in values for the amount of silane coupling agent might be 20 parts by mass, or might be 15 parts by mass, per 100 parts by mass of silica, for example.

It is preferred at Operation K0 that the amount of zinc oxide fed thereinto be not less than 0.3 part by mass, more preferred that this be not less than 1 part by mass, and still more preferred that this be not less than 2 parts by mass, per 100 parts by mass of the rubber fed thereinto at Operation K0. For every 100 parts by mass of the rubber, it is preferred that the amount of zinc oxide be not greater than 10 parts by mass, more preferred that this be not greater than 7 parts by mass, and still more preferred that this be not greater than 5 parts by mass.

As amine antioxidant, N-phenyl-N'-(1,3-dimethylbutyl)-p-phenylenediamine, alkylated diphenylamines, 4,4'-bis($\alpha,\alpha$-dimethylbenzyl)diphenylamine, N,N'-diphenyl-p-phenylenediamine, N-phenyl-N'-isopropyl-p-phenylenediamine, p-(p-toluenesulfonylamido)diphenylamine, N-phenyl-N'-(3-methacroyloxy-2-hydroxypropyl)-p-phenylenediamine, and 2,2,4-tiimethyl-1,2-dihydroquinoline polymer may be cited as examples. One or any desired combination may be chosen from thereamong and used. Thereamong, N-phenyl-N'-(1,3-dimethylbutyl)-p-phenylenediamine is preferred. The reason for this is that although N-phenyl-N'-(1,3-dimethylbutyl)-p-phenylenediamine has an inhibitory effect on a bonding reaction (specifically, the bonding reaction between silica and modified polymer), it is possible to reduce that inhibitory effect through use of the rubber composition manufacturing method of the present embodiment.

It is preferred at Operation K0 that the amount of amine antioxidant fed thereinto be not less than 0.2 part by mass, more preferred that this be not less than 0.5 part by mass, and still more preferred that this be not less than 1.0 part by mass, per 100 parts by mass of the rubber fed thereinto at Operation K0. It is preferred that the amount of amine antioxidant be not greater than 10 parts by mass, more preferred that this be not greater than 7 parts by mass, still more preferred that this be not greater than 5 parts by mass, and still more preferred that this be not greater than 4 parts by mass, per 100 parts by mass of rubber.

At Operation K0, other antioxidant, carbon black, stearic acid, wax, oil, and/or the like may be fed together with rubber, silica, silane coupling agent, zinc oxide, and amine antioxidant into internal kneader 1. One or any desired combination may be chosen from thereamong and fed thereinto.

As examples of carbon black, besides SAF, ISAF, HAF, FEF, GPF, and/or other such furnace blacks, acetylene black, Ketchen black, and/or other such electrically conductive carbon blacks may be used. The carbon black may be nongranulated carbon black or may be granulated carbon black that has been granulated based upon considerations related to the handling characteristics thereof. Any one thereamong may be used, or any two or more thereamong may be used.

At Operation K0, it is preferred that rubber and so forth (i.e., at least rubber, silica, silane coupling agent, zinc oxide, and amine antioxidant) be fed into internal kneader 1 so as to cause the fill factor to be 60% to 80%. When this is not less than 60%, it will be possible, when one wants to increase kneading temperature to a prescribed temperature, to increase this without difficulty. On the other hand, when this is not greater than 80%, it will be possible to effectively cause shearing of rubber and/or other such substance(s) to be kneaded. This will therefore make it possible for the silica to be effectively dispersed therein. Note that fill factor is the volume of all materials loaded therein (i.e., all materials fed thereinto at Operation K0) expressed as a percent of the volume of internal kneader 1.

2.1.2. Operation K1 (Operation in which Kneading Is Carried Out while Kneading Temperature Is Controlled So as To Suppress Coupling Reaction and Suppress Bonding Reaction)

At Operation K1, at least rubber, silica, silane coupling agent, zinc oxide, and amine antioxidant are kneaded while kneading temperature is controlled so as to be below the temperature lower limit for occurrence of a coupling reaction between the silica and the silane coupling agent and so as to be below the temperature lower limit for occurrence of a bonding reaction between the silica and a modified polymer. That is, at Operation K1, kneading thereof is carried out while kneading temperature is controlled so as to suppress the coupling reaction and so as to suppress the bonding reaction. By carrying out Operation K1, it is possible to increase the degree to which silica, zinc oxide, and/or amine antioxidant are dispersed prior to occurrence of these reactions. As a result, it will be possible at Operation K3 to cause the coupling reaction and the bonding reaction to proceed while in a state such that silica, zinc oxide, and/or amine antioxidant are dispersed to a high degree. This will make it possible to reduce the inhibitory effect that zinc oxide has on the coupling reaction and/or the inhibitory effect that amine antioxidant has on the bonding reaction, and will make it possible to increase the degree to which silica is dispersed within the rubber composition. It will therefore be possible to improve wet braking performance and ability to achieve reduced fuel consumption. Moreover, because it is possible to increase the degree to which zinc oxide is dispersed, it will be possible to cause zinc oxide to function effectively as a vulcanization accelerator activator. As a result, it will be possible to improve the vulcanization rate.

At Operation K1, kneading is carried out so as to cause the kneading temperature to be held constant. More specifically, at Operation K1, kneading is carried out so as to cause measured temperature $Tp$ to be maintained at target temperature $Ts$. At such time, measured temperature $Tp$ may be maintained so as to be within $\pm 5°$ C of target temperature $Ts$. Target temperature $Ts$ might be less than 140° C, or might be not greater than 138° C, or might be not greater than 135° C, or might be not greater than 132° C, or might be not greater than 130° C. It is preferred that target temperature $Ts$ be not less than 100° C, more preferred that this be not less than 110° C, still more preferred that this be not less than 115°, and still more preferred that this be not less than 120°. Where this is too low, there is a tendency for it to take a long time for silica to be dispersed. Note that target temperature Ts may be chosen as appropriate in light of the blend employed, and especially in light of the type(s) of silane coupling agent(s) employed.

At Operation K1, kneading might be carried out so as to cause the kneading temperature to be maintained within a constant range for not less than 30 seconds, for example. That is, kneading temperature might be controlled for not less than 30 seconds. It is preferred that this be not less than 40 seconds, more preferred that this be not less than 50 seconds, and still more preferred that this be not less than 60 seconds. This might be not greater than 1000 seconds, or this might be not greater than 800 seconds, or this might be not greater than 600 seconds, or this might be not greater than 400 seconds, or this might be not greater than 200 seconds, or this might be not greater than 120 seconds.

The kneading temperature might be maintained by carrying out adjustment of the rotational speed of rotor 3. More specifically, the kneading temperature might be maintained by virtue of the fact that the rotational speed of rotor 3 is adjusted by means of PID control. Here, the rotational speed of rotor 3 might be adjusted by means of PID control so as to cause measured temperature Tp to be target temperature Ts. PID control may commence at the start of kneading, or may commence when measured temperature Tp reaches some prescribed temperature (e.g., target temperature Ts, or a temperature somewhat lower than target temperature Ts).

2.1.3. Operation K2 (Operation in which Kneading Is Carried Out as Kneading Temperature Is Increased)

At Operation K2, kneading is carried out while the kneading temperature is increased. At Operation K2, the kneading temperature may be increased to a temperature on the order of that at which the coupling reaction proceeds vigorously (e.g., 140° C or higher). For example, the kneading temperature might be increased to the target temperature Ts for Operation K3, or might be increased to a temperature that is somewhat lower than the target temperature Ts.

2.1.4. Operation K3 (Operation in which Kneading Is Carried Out while Kneading Temperature Is Controlled So as To Cause Occurrence of Coupling Reaction and Bonding Reaction)

At Operation K3, kneading is carried out while kneading temperature is controlled so as to be not less than the temperature lower limit for occurrence of the coupling reaction and so as to be not less than the temperature lower limit for occurrence of the bonding reaction (specifically, the bonding reaction between the silica and the modified polymer). That is, at Operation K3, kneading is carried out while kneading temperature is controlled so as to cause the coupling reaction and the bonding reaction to proceed. By carrying out Operation K3, because it is possible to cause silane coupling agent to become affixed to silica, it is possible to reduce silica cohesive forces. That is, it is possible to increase the degree to which silica is dispersed. Furthermore, because this makes it possible for the modified polymer to be constrained by silica, it is possible to improve ability to achieve reduced heat generation in the vulcanized rubber. In addition, because it is possible to stabilize kneading temperature, this makes it possible to cause the coupling reaction and the bonding reaction to proceed while suppressing occurrence of gel formation.

At Operation K3, kneading is carried out so as to cause the kneading temperature to be held constant. More specifically, at Operation K3, kneading is carried out so as to cause measured temperature Tp to be maintained at target temperature Ts. At such time, measured temperature Tp may be maintained so as to be within ±5° C of target temperature Ts. Target temperature Ts might be not less than 140° C, or might be not less than 142° C, or might be not less than 145° C, or might be not less than 148° C, or might be not less than 150° C. Where this is too low, there is a tendency for it to take too long a time for the coupling reaction to proceed. It is preferred that target temperature Ts be not greater than 170° C, more preferred that this be not greater than 165° C, still more preferred that this be not greater than 160°, still more preferred that this be not greater than 155°, and still more preferred that this be not greater than 153°. Where this is too high, it is sometimes the case that there will be gel formation.

At Operation K3, kneading might be carried out so as to cause the kneading temperature to be maintained within a constant range for not less than 10 seconds, for example. That is, kneading temperature might be controlled for not less than 10 seconds. It is preferred that this be not less than 30 seconds, more preferred that this be not less than 50 seconds, still more preferred that this be not less than 80 seconds, and still more preferred that this be not less than 100 seconds. This might be not greater than 1000 seconds, or this might be not greater than 800 seconds, or this might be not greater than 600 seconds, or this might be not greater than 400 seconds, or this might be not greater than 200 seconds, or this might be not greater than 150 seconds.

Note that, as was the case at Operation K1, the kneading temperature might be maintained by carrying out adjustment of the rotational speed of rotor 3. More specifically, the kneading temperature might be maintained by virtue of the fact that the rotational speed of rotor 3 is adjusted by means of PID control. Here, the rotational speed of rotor 3 might be adjusted by means of PID control so as to cause measured temperature Tp to be target temperature Ts. Because this (specifically, controlling rotational speed of rotor 3 by means of PID control) makes it possible to suppress increase in kneading temperature that might otherwise occur due to heat generated from shearing, this makes it possible to stabilize the kneading temperature. It will therefore be possible to cause the coupling reaction and/or the bonding reaction (specifically, the bonding reaction between the silica and the modified polymer) to proceed while suppressing occurrence of gel formation.

Thereafter, where necessary, kneading may be continued to be carried out until a prescribed discharge temperature is reached, drop door 9 may be opened, and the rubber mixture may be discharged.

### 2.1.4. Miscellaneous

Where necessary, the rubber mixture may be subjected to further kneading for improvement of silica dispersal characteristics and/or reduction in Mooney viscosity. In other words, rekneading thereof may be carried out. Rekneading may be carried out multiple times. When carrying out rekneading, additional rubber, silica, silane coupling agent, zinc oxide, antioxidant, carbon black, stearic acid, wax, oil, and/or the like may be added to the rubber mixture. Note, however, that because procedures will be made more complicated to the extent that additional amount(s) thereof are added to the rubber mixture, it is preferred that additional amount(s) thereof are not added to the rubber mixture. In particular, it is preferred that additional amount(s) of neither zinc oxide nor amine antioxidant be added to the rubber mixture.

As a result of a procedure such as the foregoing, a rubber mixture may be obtained.

### 2.2. Operation S2 (Operation in which Rubber Mixture and Vulcanizing-Type Compounding Ingredient Are Kneaded to Obtain Rubber Composition)

At Operation S2, at least the rubber mixture and a vulcanizing-type compounding ingredient are kneaded to obtain a rubber composition. As examples of the vulcanizing-type compounding ingredient, sulfur, organic peroxides, and other such vulcanizing agents, vulcanization accelerators, vulcanization accelerator activators, vulcanization retarders, and so forth may be cited. One or any desired combination may be chosen from thereamong and used as the vulcanizing-type compounding ingredient. As examples of the sulfur, powdered sulfur, precipitated sulfur, insoluble sulfur, high dispersing sulfur, and the like may be cited. One or any desired combination may be chosen from thereamong and used as the sulfur. As examples of the vulcanization accelerators, sulfenamide-type vulcanization accelerators, thiuram-type vulcanization accelerators, thiazole-type vulcanization accelerators, thiourea-type vulcanization accelerators, guanidine-type vulcanization accelerators, dithiocarbamate-type vulcanization accelerators, and so forth may be cited. One or any desired combination may be chosen from thereamong and used as the vulcanization accelerator. Kneading may be carried out using a kneader. As the kneader, internal kneaders, open roll mills, and the like may be cited as examples. As an internal kneader, Banbury mixers, kneaders, and the like may be cited as examples.

It is preferred that the amount of silica in the rubber composition be not less than 10 parts by mass, more preferred that this be not less than 30 parts by mass, still more preferred that this be not less than 50 parts by mass, still more preferred that this be not less than 70 parts by mass, and still more preferred that this be not less than 100 parts by mass, per 100 parts by mass of rubber. It is preferred that the amount of silica be not greater than 150 parts by mass, more preferred that this be not greater than 140 parts by mass, still more preferred that this be not greater than 130 parts by mass, and still more preferred that this be not greater than 120 parts by mass, per 100 parts by mass of rubber.

The rubber composition may further comprise carbon black, stearic acid, wax, oil, sulfur, vulcanization accelerator, and/or the like. The rubber composition may comprise one or any desired combination thereamong. It is preferred that the amount of the sulfur, expressed as equivalent sulfur content, be 0.5 part by mass to 5 parts by mass for every 100 parts by mass of rubber. It is preferred that the amount of the vulcanization accelerator be 0.1 part by mass to 5 parts by mass for every 100 parts by mass of rubber.

The rubber composition may be used to fabricate a tire. More specifically, it is capable of being used in fabricating tire member(s) making up a tire. For example, the rubber composition may be used in fabricating tread rubber, sidewall rubber, chafer rubber, bead filler rubber, and/or the like. The rubber composition may be used to fabricate one or any desired combination among such tire member(s).

### 3. Tire Manufacturing Method

Methods for manufacturing tires in accordance with the present embodiment will now be described. Of the operations comprised by the tire manufacturing method of the present embodiment, note that operations for preparing a rubber composition have already been described.

A tire manufacturing method in accordance with the present embodiment comprises an operation in which a rubber composition is used to fabricate an unvulcanized tire. This operation comprises fabrication of tire member(s) which comprise a rubber composition(s), and fabrication of an unvulcanized tire which comprises the tire member(s). As tire member(s), tread rubber, sidewall rubber, chafer rubber, and bead filler rubber may be cited as examples.

Thereamong, tread rubber is preferred.

The tire manufacturing method in accordance with the present embodiment may further comprise an operation in which the unvulcanized tire is vulcanized and molded. The tire obtained in accordance with the method of the present embodiment may be a pneumatic tire.

4. Various Modifications May Be Made to the Foregoing Embodiment

Various modifications may be made to the foregoing embodiment. For example, modifications which may be made to the foregoing embodiment might include any one or more variations chosen from among the following.

The foregoing embodiment was described in terms of a constitution in which control of kneading temperature is carried out by means of the rotational speed of rotor 3 at Operation K1. However, the foregoing embodiment is not limited to this constitution. For example, control of kneading temperature may be carried out by means of the temperature of a heating/cooling medium that flows through a jacket (not shown) at internal kneader 1.

The foregoing embodiment was described in terms of a constitution in which control of kneading temperature is carried out based on PID control at Operation K1. However, the foregoing embodiment is not limited to this constitution. Control of kneading temperature may be carried out based on a control method other than PID control.

At the foregoing embodiment, a constitution was described in which a rubber composition manufacturing method comprises Operation K3 (i.e., an operation in which kneading is carried out while kneading temperature is controlled so as to cause the coupling reaction and the bonding reaction to proceed). However, the foregoing embodiment is not limited to this constitution. That is, the rubber composition manufacturing method need not comprise Operation K3. Where this is the case, at Operation K2 (i.e., the operation in which kneading is carried out as kneading temperature is increased), kneading might, for example, be continued to be carried out until the kneading temperature reaches a prescribed discharge temperature, at which time drop door 9 might be opened, and the rubber mixture might be discharged. Here, "a prescribed discharge temperature" might be not less than the temperature lower limit for occurrence of the coupling reaction and not less than the temperature lower limit for occurrence of the bonding reaction (specifically, the bonding reaction between the silica and the modified polymer).

The foregoing embodiment was described in terms of a constitution in which control of kneading temperature is carried out by means of the rotational speed of rotor 3 at Operation K3. However, the foregoing embodiment is not limited to this constitution. For example, control of kneading temperature may be carried out by means of the temperature of a heating/cooling medium that flows through a jacket (not shown) at internal kneader 1.

The foregoing embodiment was described in terms of a constitution in which control of kneading temperature is carried out based on PID control at Operation K3. However, the foregoing embodiment is not limited to this constitution. Control of kneading temperature may be carried out based on a control method other than PID control.

The foregoing embodiment was described in terms of a constitution in which a rubber mixture and a vulcanizing-type compounding ingredient are kneaded to obtain a rubber composition. However, the foregoing embodiment is not limited to this constitution. For example, the rubber mixture may be deemed to be the rubber composition.

WORKING EXAMPLES

Working examples in accordance with the present disclosure are described below.

The raw materials and reagents that were used at the Working Examples are indicated below.

| | |
|---|---|
| Modified solution polymerization SBR1 | "HPR 350" manufactured by JSR Corporation |
| Modified solution polymerization SBR2 | "HPR 355" manufactured by JSR Corporation |
| NR | RSS #3 |
| Carbon black | "SEAST KH" manufactured by Tokai Carbon Co., Ltd. |
| Silica | "VN3" (BET = 180 $m^2$/g) manufactured by Evonik Industries |
| Silane coupling agent | "Si 75" manufactured by Degussa |
| Oil | "Process NC 140" manufactured by JX Nippon Oil |
| Zinc oxide | "Zinc Oxide No. 1" manufactured by Mitsui Mining & Smelting Co., Ltd. |
| Antioxidant | "Antigen 6C" manufactured by manufactured by Sumitomo Chemical Co., Ltd. |
| Wax | "OZOACE 0355" manufactured by Nippon Seiro Co., Ltd. |
| Stearic acid | "Industrial Stearic Acid" manufactured by Kao Corporation |
| Sulfur | "5% Oil Treated Powdered Sulfur" manufactured by Tsurumi Chemical Industry Co., Ltd. |

(continued)

| Vulcanization accelerator | "NOCCELER NS-P" manufactured by Ouchi Shinko Chemical Industrial Co., Ltd. |
| --- | --- |

Preparation of Unvulcanized Rubber at Comparative Example 1

Rubber and compounding ingredients in accordance with TABLE 1 were fed into a Banbury mixer, were kneaded without carrying out PID control, and the mixture was discharged therefrom at 160° C (first kneading stage). Zinc oxide and antioxidant in accordance with TABLE 1 were added to the mixture obtained at the first kneading stage, this was kneaded without carrying out PID control, and this was discharged therefrom at 160° C (second kneading stage). Sulfur and vulcanization accelerator in accordance with TABLE 1 were added to the mixture obtained at the second kneading stage, and this was thereafter kneaded to obtain unvulcanized rubber (final stage).

Preparation of Unvulcanized Rubber at Comparative Example 2

Rubber and compounding ingredients in accordance with TABLE 1 were fed into a Banbury mixer, were kneaded without carrying out PID control, and the mixture was discharged therefrom at 160° C (first kneading stage). Sulfur and vulcanization accelerator in accordance with TABLE 1 were added to the mixture obtained at the first kneading stage, and this was thereafter kneaded to obtain unvulcanized rubber (final stage).

Preparation of Unvulcanized Rubber at Comparative Examples 3 and 5

Rubber and compounding ingredients in accordance with TABLE 1 were fed into a Banbury mixer, were kneaded while PID control was carried out (specifically, PID control in which the control start temperature was 150° C, the target temperature was 150° C, and the control time was 120 seconds), and the mixture was discharged therefrom at 160° C (first kneading stage). Sulfur and vulcanization accelerator in accordance with TABLE 1 were added to the mixture obtained at the first kneading stage, and this was thereafter kneaded to obtain unvulcanized rubber (final stage).

Preparation of Unvulcanized Rubber at Comparative Example 4

Rubber and compounding ingredients in accordance with TABLE 1 were fed into a Banbury mixer, were kneaded while PID control was carried out (specifically, PID control consisting of a first PID control in which the control start temperature was 130° C, the target temperature was 130° C, and the control time was 60 seconds; and a second PID control in which the control start temperature was 150° C, the target temperature was 150° C, and the control time was 120 seconds), and the mixture was discharged therefrom at 160° C (first kneading stage). Zinc oxide and antioxidant in accordance with TABLE 1 were added to the mixture obtained at the first kneading stage, this was kneaded without carrying out PID control, and this was discharged therefrom at 160° C (second kneading stage). Sulfur and vulcanization accelerator in accordance with TABLE 1 were added to the mixture obtained at the second kneading stage, and this was thereafter kneaded to obtain unvulcanized rubber (final stage).

Preparation of Unvulcanized Rubber at Working Examples 1-3

Rubber and compounding ingredients in accordance with TABLE 1 were fed into a Banbury mixer, were kneaded while PID control was carried out (specifically, PID control consisting of a first PID control in which the control start temperature was 130° C, the target temperature was 130° C, and the control time was 60 seconds; and a second PID control in which the control start temperature was 150° C, the target temperature was 150° C, and the control time was 120 seconds), and the mixture was discharged therefrom at 160° C (first kneading stage). Sulfur and vulcanization accelerator in accordance with TABLE 1 were added to the mixture obtained at the first kneading stage, and this was thereafter kneaded to obtain unvulcanized rubber (final stage).

Preparation of Unvulcanized Rubber at Working Example 4

Rubber and compounding ingredients in accordance with TABLE 1 were fed into a Banbury mixer, were kneaded while PID control was carried out (specifically, PID control consisting of a first PID control in which the control start temperature was 120° C, the target temperature was 120° C, and the control time was 80 seconds; and a second PID control in which the control start temperature was 150° C, the target temperature was 150° C, and the control time was 120 seconds), and the mixture was discharged therefrom at 160° C (first kneading stage). Sulfur and vulcanization accelerator in accordance with TABLE 1 were added to the mixture obtained at the first kneading stage, and this was thereafter kneaded to obtain unvulcanized rubber (final stage).

Preparation of Vulcanized Rubber

The unvulcanized rubber was vulcanized for 30 minutes at 160° C to obtain vulcanized rubber.

Productivity

Productivity was evaluated in terms of discharged amount. At TABLE 1, under the heading "Productivity," the discharged amounts at the respective Examples are shown as indexed relative to a value of 100 for the discharged amount at Comparative Example 1. The higher the index the greater the discharged amount. In other words, the higher the index the better the productivity.

Ability to Achieve Reduced Fuel Consumption

A dynamic viscoelasticity measuring device manufactured by Ueshima Seisakusho Co., Ltd., was used to measure $\tan\delta$ of the vulcanized rubber in accordance with JIS K-6394. This was measured under conditions of frequency 10 Hz, dynamic strain 1.0%, temperature 60° C, and static strain (initial strain) 10%. $\tan\delta$ of the respective Examples are shown at TABLE 1 as indexed relative to a value of 100 for the $\tan\delta$ obtained at Comparative Example 1. The smaller the index the lower the $\tan\delta$ and the better the ability to achieve reduced fuel consumption.

Wet Braking Performance

A Rüpke rebound resilience testing apparatus was used to measure rebound resilience (%) under conditions of 23° C in accordance with JIS K6255. The reciprocals (i.e., reciprocals of rebound resiliences) for the respective Examples are shown at TABLE 1 as indexed relative to a value of 100 for the reciprocal of the rebound resilience obtained at Comparative Example 1. The higher the index the better the wet braking performance.

Vulcanization Rate

Vulcanization testing of unvulcanized rubber was carried out in accordance with JIS K 6300-2, and following determination of the vulcanization curve (specifically, the vulcanization curve on which torque is plotted on the vertical axis, and vulcanization time is plotted on the horizontal axis), the time at 50% vulcanization (t50) was calculated. Vulcanization testing was carried out at 160° C. The following formula was used to calculate the time at 50% vulcanization (t50) from the maximum value (Fmax) and the minimum value (Fmin) of torque on the vulcanization curve.

$$t50 = \{(Fmax - Fmin) \times 0.5 + Fmin\}$$

The times at 50% vulcanization (t50) of the respective Examples are shown at TABLE 1 as indexed relative to a value of 100 for the time at 50% vulcanization (t50) obtained at Comparative Example 1. The smaller the index the shorter the time at 50% vulcanization (t50) and the faster the vulcanization rate.

TABLE 1

| | | | Comparative Example 1 | Comparative Example 2 | Comparative Example 3 | Comparative Example 4 | Comparative Example 5 | Working Example 1 | Working Example 2 | Working Example 3 | Working Example 4 |
|---|---|---|---|---|---|---|---|---|---|---|---|
| Blended amount parts by mass | First kneading stage | Modified solution polymerization SBR1 | 35 | 35 | 35 | 35 | 35 | 35 | 35 | 35 | 35 |
| | | Modified solution polymerization SBR2 | 35 | 35 | 35 | 35 | 35 | 35 | 35 | 35 | 35 |
| | | NR | 30 | 10 | 10 | 10 | 10 | 10 | 10 | 10 | 10 |
| | | Carbon black | 10 | 10 | 10 | 10 | 10 | 10 | 10 | 10 | 10 |
| | | Silica | 70 | 70 | 70 | 70 | 100 | 70 | 100 | 70 | 70 |
| | | Silane coupling agent | 5.6 | 5.6 | 5.6 | 5.6 | 8.0 | 5.6 | 8.0 | 5.6 | 5.6 |
| | | Oil | 15 | 15 | 15 | 15 | 35 | 15 | 35 | 15 | 15 |
| | | Zinc oxide | - | 3 | 3 | - | 3 | 3 | 3 | 3 | 3 |
| | | Antioxidant | - | 2 | 2 | - | 2 | 2 | 2 | 2 | 2 |
| | | Wax | 2 | 2 | 2 | 2 | 2 | 2 | 2 | 2 | 2 |
| | | Stearic acid | 2 | 2 | 2 | 2 | 2 | 2 | 2 | 2 | 2 |
| | Second kneading stage | Zinc oxide | 3 | - | - | 3 | - | - | - | - | - |
| | | Antioxidant | 2 | - | - | 2 | - | - | - | - | - |
| | Final stage | Sulfur | 2 | 2 | 2 | 2 | 2 | 2 | 2 | 2 | 2 |
| | | Vulcanization accelerator | 1 | 1 | 1 | 1 | 1 | 1 | 1 | 1 | 1 |

13

| | | | Comparative Example 1 | Comparative Example 2 | Comparative Example 3 | Comparative Example 4 | Comparative Example 5 | Working Example 1 | Working Example 2 | Working Example 3 | Working Example 4 |
|---|---|---|---|---|---|---|---|---|---|---|---|
| Kneading Conditions | First kneading stage | Target temperature at first PID control °C | - | - | - | 130 | - | 130 | 130 | 130 | 120 |
| | | Target temperature at second PID control °C | - | - | 150 | 150 | 150 | 150 | 150 | 150 | 150 |
| | | Control time at first PID control seconds | - | - | - | 60 | - | 60 | 60 | 60 | 80 |
| | | Control time at second PID control seconds | - | - | 120 | 120 | 120 | 120 | 120 | 120 | 120 |
| | | Discharge temperature °C | 160 | 160 | 160 | 160 | 160 | 160 | 160 | 160 | 165 |
| | | Discharged amount L | 153 | 153 | 153 | 153 | 153 | 153 | 153 | 195 | 153 |
| | | Effective volume (kneading chamber volume) L | 255 | 255 | 255 | 255 | 255 | 255 | 255 | 255 | 255 |
| | | Fill factor % | 60 | 60 | 60 | 60 | 60 | 60 | 60 | 76 | 60 |
| | Number of kneading stages | | 3 | 2 | 2 | 3 | 2 | 2 | 2 | 2 | 2 |
| Evaluation | Productivity | | 100 | 100 | 100 | 100 | 100 | 100 | 100 | 127 | 100 |
| | Ability to Achieve Reduced Fuel Consumption | | 100 | 102 | 99 | 94 | 92 | 93 | 87 | 95 | 90 |
| | Wet Braking Performance | | 100 | 100 | 104 | 106 | 110 | 108 | 115 | 105 | 111 |
| | Vulcanization Rate | | 100 | 154 | 149 | 95 | 168 | 95 | 95 | 97 | 97 |

EP 4 201 626 A1

Where a procedure was employed in which kneading was performed without carrying out PID control at the first kneading stage, addition of antioxidant and zinc oxide at the first kneading stage caused vulcanization rate to be slower than if these had been added at the second kneading stage (see Comparative Example 1 and Comparative Example 2). In addition, when antioxidant and zinc oxide were added at the first kneading stage, this resulted in poor ability to achieve reduced fuel consumption (see Comparative Example 1 and Comparative Example 2).

Where a procedure was employed in which kneading was performed while carrying out PID control (specifically, PID control consisting of a first PID control in which the target temperature was 130° C, and a second PID control in which the target temperature was 150° C) at the first kneading stage, the vulcanization rate when antioxidant and zinc oxide were added at the first kneading stage was on the same order as the vulcanization rate when these were added at the second kneading stage (see Comparative Example 4 and Working Example 1). In addition, when antioxidant and zinc oxide were added at the first kneading stage, this resulted in excellent ability to achieve reduced fuel consumption and wet braking performance (see Comparative Example 4 and Working Example 1).

Where a procedure was employed in which antioxidant and zinc oxide were fed thereinto during the first kneading stage, vulcanization rate was faster when PID control consisted of a first PID control in which the target temperature was 130° C and a second PID control in which the target temperature was 150° C than when PID control consisted of only the second PID control in which the target temperature was 150° C (see Comparative Example 3 and Working Example 1; see Comparative Example 5 and Working Example 2). In addition, when PID control consisted of a first PID control in which the target temperature was 130° C and a second PID control in which the target temperature was 150° C, this resulted in excellent ability to achieve reduced fuel consumption and wet braking performance (see Comparative Example 3 and Working Example 1; see Comparative Example 5 and Working Example 2).

Moreover, where silica was blended therein in an amount that was 100 parts by mass, vulcanization rate being 168 points at Comparative Example 5 and being 95 points at Working Example 2, the difference therebetween was 73 points. On the other hand, where silica was blended therein in an amount that was 70 parts by mass, vulcanization rate being 149 points at Comparative Example 3 and being 95 points at Working Example 1, the difference therebetween was 54 points. These results indicate that ability to improve vulcanization rate was better with 100 parts by mass of silica than it was with 70 parts by mass of silica.

EXPLANATION OF REFERENCE NUMERALS

]

1    internal kneader
2    casing
2a    opening
3    rotor
4    kneading chamber
5    neck
6    inlet port
6a    hopper door
7    ram
8    shaft
9    drop door
11    controller
13    temperature sensor

**Claims**

1. A rubber composition manufacturing method comprising:

    an operation in which at least amine antioxidant, zinc oxide, silane coupling agent, silica, and rubber comprising modified polymer are fed into an internal kneader (1); and
    an operation in which kneading is carried out at the internal kneader (1) while kneading temperature is controlled so as to suppress occurrence of a coupling reaction between the silica and the silane coupling agent, and so as to suppress occurrence of a bonding reaction between the silica and the modified polymer.

2. The rubber composition manufacturing method according to claim 1 wherein the amine antioxidant is N-phenyl-N'-(1,3-dimethylbutyl)-p-phenylenediamine.

3. The rubber composition manufacturing method according to claim 1 or 2 wherein the silica is fed into the internal kneader (1) in an amount that is not less than 100 parts by mass per 100 parts by mass of the rubber that is fed into the internal kneader (1).

4. The rubber composition manufacturing method according to any of claims 1 through 3 further comprising an operation in which kneading is carried out at the internal kneader (1) while kneading temperature is controlled so as to cause the coupling reaction and the bonding reaction to proceed.

5. The rubber composition manufacturing method according to any of claims 1 through 4 wherein the modified polymer has an alkoxy group.

6. The rubber composition manufacturing method according to any of claims 1 through 4 wherein the modified polymer is styrene-butadiene rubber which has an alkoxy group.

7. The rubber composition manufacturing method according to any of claims 1 through 6 wherein the modified polymer is fed into the internal kneader (1) in an amount that is not less than 20 mass% per 100 mass% of the rubber that is fed into the internal kneader (1).

8. The rubber composition manufacturing method according to any of claims 1 through 7 wherein the rubber further comprises natural rubber.

9. The rubber composition manufacturing method according to any of claims 1 through 8 wherein the zinc oxide is fed into the internal kneader (1) in an amount that is not less than 0.3 part by mass but not greater than 10 parts by mass per 100 parts by mass of the rubber that is fed into the internal kneader (1).

10. The rubber composition manufacturing method according to any of claims 1 through 9 wherein the amine antioxidant is fed into the internal kneader (1) in an amount that is not less than 0.2 part by mass but not greater than 10 parts by mass per 100 parts by mass of the rubber that is fed into the internal kneader (1).

11. The rubber composition manufacturing method according to any of claims 1 through 10 wherein, during the operation in which kneading is carried out while kneading temperature is controlled so as to suppress occurrence of the coupling reaction and so as to suppress occurrence of the bonding reaction, kneading is carried out so as to cause kneading temperature to be held constant.

12. The rubber composition manufacturing method according to any of claims 1 through 11 further comprising an operation in which kneading is carried out at the internal kneader while kneading temperature is controlled so as to cause the coupling reaction and the bonding reaction to proceed;
wherein, during the operation in which kneading is carried out while kneading temperature is controlled so as to cause the coupling reaction and the bonding reaction to proceed, kneading is carried out so as to cause kneading temperature to be held constant.

13. A tire manufacturing method comprising:

an operation in which the rubber composition manufacturing method according to any of claims 1 through 12 is used to prepare the rubber composition; and
an operation in which the rubber composition is used to fabricate an unvulcanized tire.

14. The tire manufacturing method according to claim 13 wherein
the operation in which the unvulcanized tire is fabricated comprises fabrication of a tire member comprising the rubber composition, and fabrication of the unvulcanized tire that comprises the tire member.

[FIG. 1]

Europäisches Patentamt

European Patent Office

Office européen des brevets

# EUROPEAN SEARCH REPORT

Application Number

EP 22 21 2080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 100784 A (TOYO TIRE & RUBBER CO) 2 July 2020 (2020-07-02) * tables 1-2 * * paragraph [0035] * ----- | 1-14 | INV. B29B7/00 C08L15/00 C08K3/22 C08K5/548 |
| A | US 9 259 856 B2 (ODA TAKUMI [JP]; SHIMA HIDEKI [JP]; TOYO TIRE & RUBBER CO [JP]) 16 February 2016 (2016-02-16) * Second example * * column 3, lines 45-49 * ----- | 1-14 | C08K3/36 C08K5/18 |
| A | JP 2018 070755 A (SUMITOMO RUBBER IND) 10 May 2018 (2018-05-10) * table 5 * * paragraph [0006] * ----- | 1-14 | |

TECHNICAL FIELDS
SEARCHED        (IPC)

B29B
C08L
C08K

The present search report has been drawn up for all claims

| Place of search | Date of completion of the search | Examiner |
|---|---|---|
| Munich | 19 April 2023 | Baekelmans, Didier |

EPO FORM 1503 03.82 (P04C01)

## ANNEX TO THE EUROPEAN SEARCH REPORT
## ON EUROPEAN PATENT APPLICATION NO.

EP 22 21 2080

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2023

| Patent document cited in search report | | Publication date | Patent family member(s) | | Publication date |
|---|---|---|---|---|---|
| JP 2020100784 | A | 02-07-2020 | JP | 7189759 B2 | 14-12-2022 |
| | | | JP | 2020100784 A | 02-07-2020 |
| US 9259856 | B2 | 16-02-2016 | CN | 102873778 A | 16-01-2013 |
| | | | DE | 102012105855 A1 | 17-01-2013 |
| | | | US | 2013018141 A1 | 17-01-2013 |
| JP 2018070755 | A | 10-05-2018 | NONE | | |

**EP 4 201 626 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021102718 A
- JP 2002220492 A